# EUROPÄISCHE PATENTSCHRIFT

(11) **EP 0 498 949 B1**
(45) Veröffentlichungstag und Bekanntmachung des Hinweises auf die Patenterteilung: **19.10.1994**
(21) Anmeldenummer: 91120672.0
(22) Anmeldetag: 02.12.1991
(51) Int. Cl.: B60S 1/16

(54) **Antriebsvorrichtung, insbesondere für eine Schiebenwischeranlage an einem Kraftfahrzeug**
Driving device, especially for a windscreen wiper system on a motor vehicle
Dispositif d'entraînement, notamment pour un système d'essuie-glace sur un véhicule automobile

(30) Priorität: 14.02.1991 DE 4104406
(43) Veröffentlichungstag der Anmeldung: 19.08.1992
(73) Patentinhaber: ITT Automotive Europe GmbH, 60488 Frankfurt am Main (DE)
(72) Erfinder: Bruhn, Rainer, W-7500 Karlsruhe 21 (DE); Walther, Bernd, W-7120 Bietigheim-Bissingen (DE)

(56) Entgegenhaltungen:
- DE-A- 3 740 312
- DE-A- 3 920 731
- GB-A- 783 651
- US-A- 2 765 064

## Beschreibung

Die Erfindung bezieht sich auf eine Antriebsvorrichtung, insbesondere für eine Scheibenwischeranlage an einem Kraftfahrzeug, gemäß dem Oberbegriff des Anspruchs 1.

Eine derartige Antriebsvorrichtung ist beispielsweise durch die DE-OS 39 20 731 bekannt geworden. Beim bevorzugten Anwendungsgebiet dieser Antriebsvorrichtung, nämlich dem Einbau in ein Kraftfahrzeug, trägt die Antriebswelle den Wischarm, an dessen freiem Ende das Wischblatt in bekannter Weise austauschbar gehalten ist. In modernen Scheibenwischeranlagen kann der Wischwinkel bis zu 180° betragen. Irotzdem muß gewährleistet sein, daß das Wischblatt in der Parkstellung stets seine vorgesehene Endlage einnimmt und beim Wischen die beiden Endstellungen korrekt eingehalten werden. Desweiteren wird verlangt, daß ein Nachlaufen in den beiden Endstellungen nicht auftritt. Es liegt infolgedessen die Aufgabe vor, eine Antriebsvorrichtung mit den Merkmalen des Oberbegriffs des Anspruchs 1 so weiterzubilden, daß sie den genannten Forderungen gerecht wird.

Zur Lösung dieser Aufgabe wird erfindungsgemäß vorgeschlagen, daß die Antriebsvorrichtung gemäß dem Oberbegriff des Anspruchs 1 entsprechend dem kennzeichnenden Teil dieses Anspruchs ausgebildet ist.

Der Einfachheit halber beziehen sich die nachfolgenden Ausführungen auf die Anwendung der Antriebsvorrichtung bei einer Scheibenwischeranlage eines Kraftfahrzeugs, ohne daß dies einschränkend verstanden werden darf.

Wenn der Fahrer den Wischerschalter betätigt, so führt dies zu einem Anlaufen des Antriebsmotors, dessen Drehbewegung in bekannter Weise in eine pendelnde Bewegung der Abtriebswelle umgesetzt wird. Auf der Antriebswelle des Elektromotors sitzt dabei eine Schnecke, welche ein Schneckenrad antreibt. An einem exzentrisch angebrachten Bolzen des Schneckenrads ist eine Schubstange angelenkt, welche die Drehbewegung in eine Hin- und Herbewegung umsetzt. Die Schubstange ist Teil einer kniehebelartigen Schwinge, wobei jeder Hebelarm des Kniehebels ein Ritzel oder Teilritzel trägt. Diese beiden Ritzel oder Teilritzel stehen in Eingriff miteinander. Eines ist koaxial zur gemeinsamen Achse der Schwinge angeordnet, und das andere koaxial zur Abtriebswelle.

Weil das Anschlagteil drehfest mit der Abtriebswelle verbunden ist, macht es deren Hin- und Herbewegung mit. Dasselbe gilt für den am Anschlagteil angebrachten Nocken. Da die beiden bogenförmigen Rampen des Deckels oder dergleichen gegeneinander hin geneigt sind, wobei die niederen Rampenenden einander zugeordnet sind, läuft der Nocken - ausgehend von der einen Endstellung der Abtriebswelle - zunächst entlang der einen Rampe gegen die Ebene der Deckelinnenseite hin. Er ist dort angekommen, wenn die Abtriebswelle etwa ihren halben Schwenkwinkel durchlaufen hat. Anschließend muß der Nocken entlang der zweiten Rampe wieder hochsteigen. Dies führt aufgrund des begrenzten axialen Spiels der Abtriebswelle zu einer Abbremsung der letzteren, d. h. die Drehbewegung wird gegen das Ende des Schwenkwinkels hin immer schwergängiger, und zwar nach beiden Richtungen. Die Schwergängigkeit muß jedoch so festgelegt werden, daß der Antriebsmotor die Abtriebswelle noch problemlos bis zu den Drehwinkelenden drehen kann. Andererseits vermeidet man aber durch dieses kontinuierliche, zunehmende Abstoppen der Drehbewegung nach jedem Ende des Wischwinkels hin ein zu heftiges Auftreffen des Nockens an der den Schwenkwinkel im Normalfalle begrenzenden Auftrefffläche. Zudem wird die kinetische Energie des Wischarms verkleinert.

Aus den verschiedensten Gründen kann es jedoch beim Gebrauch der Scheibenwischeranlage vorkommen, daß vom Wischarm her in unzulässiger Weise drehend auf die Abtriebswelle eingewirkt wird. In einem solchen Falle läuft dann nach einer minimalen Drehbewegung - ausgehend von der Endstellung der Abtriebswelle aus gesehen - das Anschlagelement am zugeordneten gehäusefesten Anschlag auf und begrenzt dadurch das unzulässige Weiterdrehen. Auf diese Weise wird der Motor gegen Beschädigung geschützt.

Für diese Antriebsvorrichtung sind selbst kritische Wischwinkel von beispielsweise 180° kein Problem. Insofern erfüllt diese Antriebsvorrichtung alle an sie gestellten Forderungen. Es kommt noch hinzu, daß es sich beim Anschlagteil um ein sehr einfaches und preiswert herzustellendes Bauteil handelt, welches leicht gegen ein anderes ausgetauscht werden kann. Bei anderer Dimensionierung der Rampen, in Umfangsrichtung gesehen, und des Umfangsabstands der beiden Auftreffflächen für den Nocken kann ein und dieselbe Antriebsvorrichtung lediglich durch Austausch des Anschlagteils gegen ein anderes für unterschiedliche Wischwinkel verwendet werden. Dies führt zu einer Erhöhung der Serie und damit insgesamt zur kostengünstigen Fertigung.

Eine Weiterbildung der Erfindung sieht vor, daß die beiden Rampen und die beiden Auftreffflächen an den Deckel oder dergleichen angeformt sind, wobei jede Auftrefffläche durch die der Rampe zugeordnete Flanke einer nach innen gerichteten Erhebung der Innenfläche des Deckels oder dergleichen gebildet ist. Die beiden Erhebungen ragen demnach - vom Deckel aus betrachtet - ins Gehäuse hinein. Absolut gesehen handelt es sich dabei um einen verhältnismäßig kleinen Betrag, weil die durch jede Rampe bewirkte Verzögerung der Drehbewegung schon allein im Hinblick auf die übliche Stärke des Antriebsmotors nur gering sein darf.

Gemäß einer besonders bevorzugten Ausführungsform der Erfindung ist der Deckel oder dergleichen aus Blech gefertigt und sind die beiden Rampen durch je einen ersten Durchzug des Deckelbodens und die beiden Erhebungen durch je einen sich daran anschließenden zweiten Durchzug größerer liefe gebildet. "liefe" bedeutet auch hier eine Erstreckung vom Deckel aus ins Gehäuseinnere. Diese Durchzüge kann man mit einem geeigneten Werkzeug relativ leicht am Blech anbringen und gegebenenfalls in einem Arbeitsgang erstellen.

Eine weitere Ausgestaltung der Erfindung besteht darin, daß jede Rampe mit einem Radius in die Auftrefffläche übergeht und der Nocken an seinem in Bewegungsrichtung vorderen und hinteren Ende jeweils mit etwa demselben Radius versehen ist. Er kann sich damit in beiden Endstellungen übergangslos an die Auftrefffläche anlegen.

Die Rampenhöhe kann vorteilhafterweise bei einer bogenförmigen Längserstreckung über ca. 80° etwa 0,5 mm betragen. Die Erhebung mit der Auftrefffläche ist in diesem Falle zweckmäßigerweise 2 - 3 mm hoch.

Eine weitere Variante der Erfindung entnimmt man Anspruch 9. Man erreicht hier eine kippsichere Abstützung auch dann, wenn die Abstützung der Lasche und des Nockens, bezogen auf die Abtriebswelle, einander etwa diametral gegenüberliegen. Die bogenförmige Stützfläche kann in sehr vorteilhafter Weise aus einem vierten Durchzug bestehen. Über die Lasche wird die Wischachse mit diesem vierten Durchzug axial am Deckel abgestützt.

Eine Weiterbildung dieser Konstruktion ergibt sich aus Anspruch 10. Das darin beschriebene Anschlagteil zeichnet sich durch eine problemlos zu fertigende Form aus. Vorteilhafte Weiterbildungen dieser Variante ergeben sich aus den Ansprüchen 11 bis 14.

Eine andere Ausführungsform der Erfindung kann man Anspruch 15 entnehmen. In diesem Falle ist der Nocken der deckelseitigen Lasche zugeordnet, so daß die Axialkraft unmittelbar vom Anschlagteil auf die Lasche übertragen werden kann. Somit wird die Wischachse axialspielfrei. Die Montage dieses Anschlagteils ist besonders einfach, weil man es lediglich auf das über die deckelseitige Lasche vorstehende Ende der Abtriebswelle aufschiebt. Das zweite Ritzel ist hier als Teilritzel ausgebildet, und man kann dann die Lücke zwischen seinen letzten Zähnen zur Drehsicherung heranziehen.

Anspruch 16 beschreibt, wie man in Weiterbildung der Erfindung bei einem als Teilritzel ausgebildeten zweiten Ritzel die drehfeste Verbindung des Anschlagelements mit letzterem bzw. der Abtriebswelle im einzelnen gestalten kann.

Anspruch 17 entnimmt man die zweckmäßige Ausgestaltung im Bereich der bogenförmigen Wand des Anschlagteils und des Anschlagelements an der bogenförmigen Wand. Das Anschlagelement ist in Umfangsrichtung gesehen kürzer als die bogenförmige Wand. Zweckmäßigerweise ist es der bogenförmigen Wand symmetrisch zugeordnet.

Eine weitere bevorzugte Ausführungsform der Erfindung ist dadurch gekennzeichnet, daß die ringförmige, gelochte Platte des Anschlagteils die Gestalt eines Hubnockens aufweist und sich der mit den Rampen zusammenwirkende Nocken an der Hubnockenspitze der Platte befindet. Dieses Anschlagteil ist ebenfalls problemlos herzustellen und zeichnet sich trotzdem durch eine einfach zu montierende und stabile Form aus.

Das Anschlagteil mit den Nocken und allen anderen damit verbundenen Elementen ist in sehr vorteilhafter Weise einstückig aus Kunststoff gefertigt, wobei der Kunststoff einerseits die notwendige Festigkeit, andererseits aber auch die gewünschte Elastizität und Verschleißfestigkeit aufweist.

Die Erfindung wird nachstehend anhand der Zeichung näher erläutert. Die Zeichnung zeigt zwei Ausführungsbeispiele der Erfindung. Hierbei stellen dar:
- Figur 1: eine abgebrochene Draufsicht auf eine Scheibenwischeranlage bei abgenommenem Deckel,
- Figur 2: einen vergrößerten Ausschnitt aus Figur 1, wobei einige Teile weggelassen sind,
- Figur 3: eine Draufsicht auf die Innenseite eines Gehäusedeckels, wobei das Gehäuse von demjenigen der Figur 1 etwas abweicht,
- Figur 4: in vergrößertem Maßstab einen abgebrochenen Schnitt entlang der Linie IV-IV der Figur 3,
- Figur 5: einen Schnitt gemäß der Linie V-V der Figur 3,
- Figur 6: in vergrößertem Maßstab, abgebrochen, die Einzelheit X der Figur 3,
- Figur 7: einen durch die geometrische Achse der Abtriebswelle geführten abgebrochenen Längsschnitt,
- Figur 8: eine Draufsicht auf das Anschlagteil der Figur 7 in Pfeilrichtung Y gesehen,
- Figur 9: eine der Figur 7 entsprechende Darstellung eines zweiten Ausführungsbeispiels,
- Figur 10: eine Draufsicht auf Figur 9 in Pfeilrichtung Z gesehen, ohne Gehäuse, und
- Figur 11: eine verkürzte Darstellung einer Seitenansicht der Figur 9.

Der Motor 1 einer Scheibenwischeranlage trägt am freien Ende seiner Welle 2 eine Schnecke 3, die ein Schneckenrad 4 antreibt. Exzentrisch zu dessen Lagerwelle 5 ist am Schneckenrad 4 ein exzentrischer Bolzen 6 befestigt, an welchem das eine Ende einer Lasche 7 drehbar gelagert ist. Sie trägt an ihrem anderen Ende ein erstes Teilritzel 8. Dessen Zähne 9 kämmen mit den Zähnen 10 eines zweiten Teilritzels 11. Das zweite Teilritzel 11 ist beispielsweise mit Hilfe einer Rändelung 13 drehfest auf der Abtriebswelle 12 gehalten. An deren freiem Ende 14 wird ein Wischerarm mit Wischerblatt in nicht dargestellter Weise befestigt.

Die Abtriebswelle 12 durchsetzt ein Laschenpaar mit den beiden Laschen 15 und 16, welche beidseits der Ritzel bzw. Teilritzel angeordnet sind. Die ritzelfernen Erden der Laschen 15 und 16 sind über einen Bolzen 17 gelenkig mit der Lasche 7 verbunden, wobei letztere und die beiden Laschen 15, 16 einen Kniehebel bilden. Aus dem Vorstehenden ergibt sich ohne weiteres, daß die insoweit bekannte Kinematik des Antriebs die Drehbewegung des Motors 1 in eine Pendelbewegung der Abtriebswelle 12 umwandelt, wodurch dann auch das Wischblatt die bekannte Hin- und Herbewegung entlang der Kraftfahrzeugscheibe durchführt.

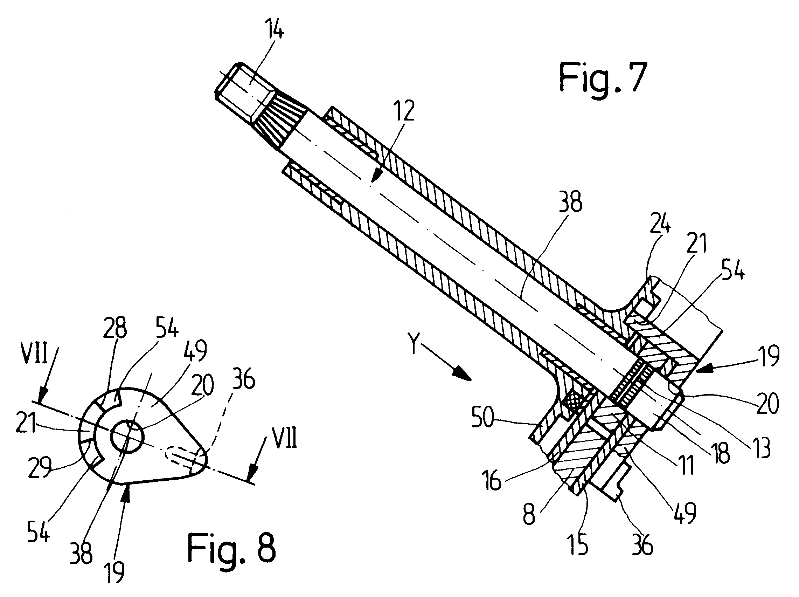

Damit der vorgegebene Schwenkwinkel des Wischarms bzw. der Abtriebswelle 12 korrekt eingehalten wird, ist auf das ritzelseitige, über die erste Lasche 15 vorstehende Ende 18 der Abtriebswelle 12 ein Anschlagteil 19 aufgesteckt. In Figur 8 ist dieses Anschlagteil gegenüber Figur 7 verkleinert dargestellt. Man sieht dort aber die Bohrung 20, deren Durchmesser demjenigen des Wellenendes 18 entspricht.

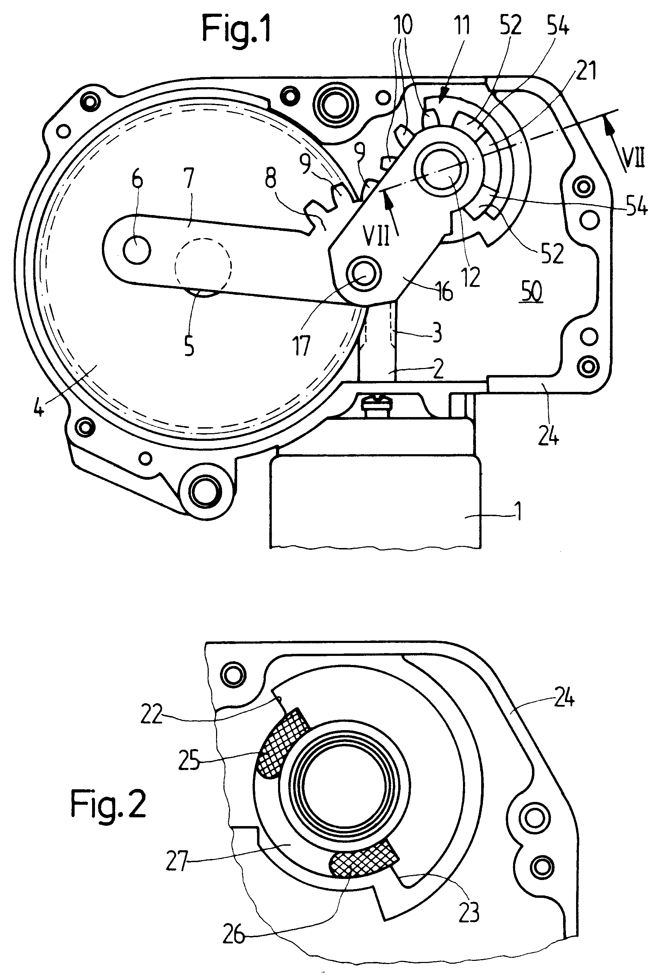

Das Anschlagteil 19 trägt ein Anschlagelement 21, welches in Figur 8 senkrecht zur Bildebene nach oben ragt. Es ist an zwei gehäusefesten Anschlägen 22 und 23 (Fig. 2) wahlweise anlegbar, jedoch liegt es nur im Sonderfalle am Anschlag 22 oder 23 des Gehäuses 4 an. Jedem dieser Anschläge kann ein elastischer Puffer 25 bzw. 26 - in Drehrichtung gesehen - vorgeschaltet werden. Ein solcher Sonderfall kann beispielsweise dann auftreten, wenn man bei der Wischermontage in unzulässiger Weise ein Drehmoment auf die Abtriebswelle von Hand aufgibt. Im Normalbetrieb der Wischeranlage stoppt die Drehbewegung der Abtriebswelle 12 in der nachstehend erläuterten Weise ab, bevor die Kante 28 bzw. 29 den zugeordneten Festanschlag 22 bzw. 23 erreicht hat. Diese Normalstellung kann beispielsweise dann erreicht sein, wenn das Anschlagelement 21 gerade an einem der Puffer 25 bzw. 26 angekommen ist.

Erfindungsgemäß wird die Drehbewegung nach beiden Seiten hin mit Hilfe eines Nockens 36 am Anschlagteil 19 begrenzt. Er steht gemäß beispielsweise Figur 7 in bezug auf das Anschlagelement 21 nach entgegengesetzter Richtung hin axial ab. Er arbeitet wechselweise mit zwei bogenförmigen Rampen 30 bzw. 31 zusammen, die sich an der Innenseite eines auf das Gehäuse 24 aufgesetzten Deckels 32 oder dergleichen befinden. Bezogen auf die Innenfläche 33 des Deckels 32 steigt die Rampe 31 im Uhrzeigersinn und die Rampe 30 im Gegenuhrzeigersinn stetig an, wobei ihre voneinander entfernten Enden jeweils am tiefsten in das Gehäuseinnere hineinragen. Jeweils am höchsten Ende jeder Rampe befindet sich eine Auftrefffläche 34 bzw. 35 für den Nocken 36. Er kommt aber an diesen beiden relativ steil ansteigenden Auftreffflächen 34 oder 35 im Normalbetrieb nicht zur Anlage, sondern nur im Extremfalle, in dem dann auch das Anschlagelement 21 an einem der beiden gehäusefesten Anschläge 22 oder 23 auftrifft. Der Nocken 36 kann in besonderen Fällen auch im Bogen vergrößert werden, so daß bei gleichen Anschlägen im Deckel ein zusätzlicher Festanschlag zum Anschlag am Gehäuse auch bei geringeren Wischwinkeln, falls gefordert, realisiert werden kann.

Ausgehend von einer Mittelstellung des Nockens 36, in der er sich im Zwischenraum zwischen den beiden bogenförmigen Rampen 30 und 31 befindet, und in welcher er an der Deckelabstützfläche 37 anliegt, welche demselben Niveau angehört wie die Deckelfläche 33, d. h. einen Teil dieser Deckelinnenfläche bildet, läuft der Nocken beispielsweise bei einer Drehbewegung der Abtriebswelle 12 im Sinne des Pfeils 38 entlang der bogenförmigen Rampe 31 hoch. Weil die Abtriebswelle 12 in axialer Richtung nicht, zumindest nicht nennenswert, ausweichen kann, wird die Reibung zwischen dem Nocken 36 und der Rampe 31 mit zunehmendem Drehwinkel immer größer, so daß die Drehbewegung schließlich aufgrund der erzeugten Reibung etwa dann zum Stillstand kommt, wenn sich der Nocken 36 nahe der steilen Auftrefffläche 35 befindet, sie aber noch nicht erreicht hat. Das Wischblatt hat in diesem Falle eine seiner beiden vorgesehenen Endstellungen erreicht. Anschließend wird die Drehbewegung der Abtriebswelle umgekehrt, und der Nocken 36 wandert dann entlang der bogenförmigen Rampen 31 wieder zur Deckelabstützstelle 37 hin, bei stetig abnehmender Reibung zwischen Rampenoberfläche und Nocken. Etwa nach dem halben Drehwinkel wird der Nocken 36 entgegen dem Pfeil 38 entlang der Rampe 30 bewegt und in der zuvor beschriebenen Weise mit zunehmendem Drehwinkel immer stärker abgebremst. Er stoppt vor Erreichen der Auftrefffläche 34.

Lediglich der Ordnung halber wird noch nachgetragen, daß der Nocken 36 gemäß beispielsweise Figur 8 von der geometrischen Drehachse 38 der Abtriebswelle 12 radial so weit entfernt ist, daß er den Flächen der Rampen 30 und 31 etwa mittig zugeordnet ist.

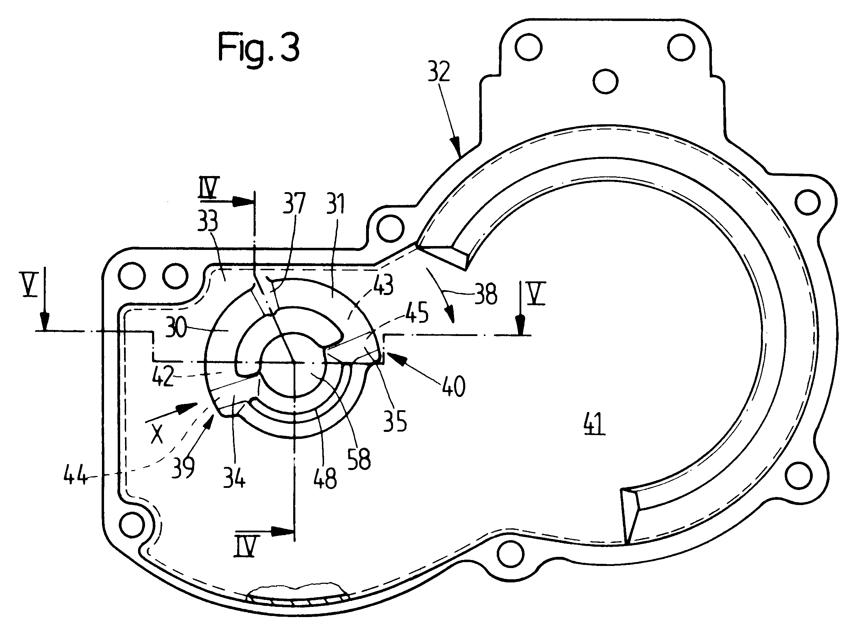

Jede der beiden Auftreffflächen 34 und 35 ist durch die rampenseitige Flanke einer Erhebung 39 bzw. 40 an der Deckelinnenseite gebildet. Wenn der Deckel, wie dies in bevorzugter Weise vorgesehen ist, aus Blech gefertigt ist, so werden die beiden Rampen 30 und 31 durch je einen ersten Durchzug 42 bzw. 43 des Deckelbodens 41 gebildet. Gemäß Figur 3 schließt sich unmittelbar an den ersten Durchzug 42 bzw. 43 ein zweiter, tieferer Durchzug 44 bzw. 45 an, welcher die Erhebungen 39 und 40 mit den steilen Auftreffflächen 34 bzw. 35 ergibt.

Die Rampe bzw. ihre dem Nocken zugekehrte Oberfläche geht in einem Radius 46 in die zugeordnete Auftrefffläche 34 bzw. 35 über, wobei dieser Radius in gleicher Weise am Nocken 36 vorgesehen ist. Der Nocken liegt also allenfalls linienförmig auf der Rampe auf.

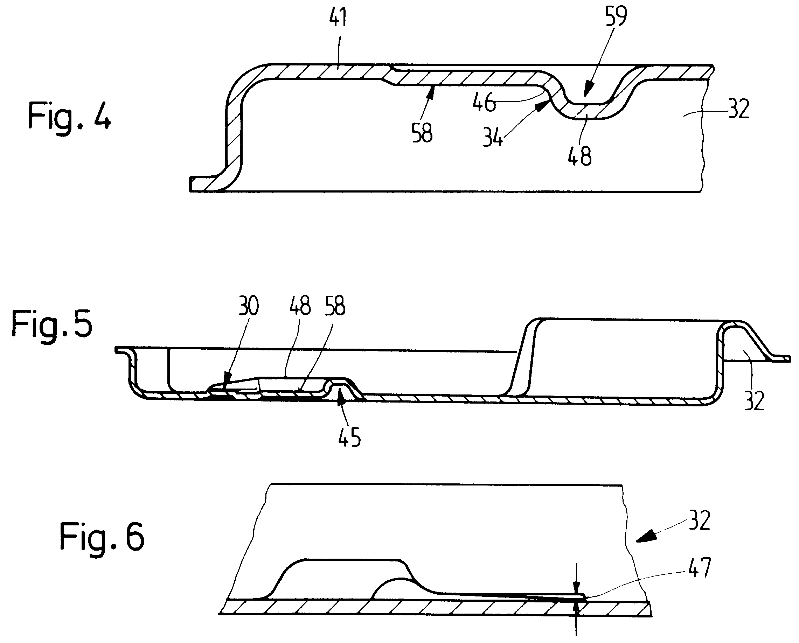

Insbesondere aus Figur 6 entnimmt man, daß die Rampen nur ganz flach ansteigen. Die maximale Rampenhöhe im Bereich der Auftrefffläche 34 bzw. 35 beträgt bei einer bogenförmigen Längserstreckung über ca. 80° etwa 0,5 mm. Die Erhebung mit der Auftrefffläche 34 bzw. 35 ist gegenüber der Ebene des Deckelbodens 41 etwa 2 - 3 mm hoch. In Figur 6 ist der die Rampenneigung bestimmende Winkel 47 eingezeichnet.

Das Anschlagteil 19 der ersten Variante (Figur 8) weist, wie bereits erwähnt, einen auf die Abtriebswelle 12 aufschiebbaren Ring 29 auf. Er ist allerdings bei diesem Ausführungsbeispiel außen nicht kreisförmig, sondern hubnockenartig gestaltet. Von der gegen den Gehäuseboden 50 weisenden Fläche dieses Ringes steht das als bogenförmige Leiste ausgebildete Anschlagelement 21 ab, und von der gegenüberliegenden Fläche der Nocken 36, der sich an der Nockenspitze befindet. Das Anschlagelement 21 ist, wie beispielsweise die Figuren 1 und 8 zeigen, an seinem Fuß in Umfangsrichtung verbreitert, wobei diese Verbreiterung mit 54 bezeichnet ist (Figur 1). Sie greift in eine Randausnehmung 52 eines zahnfreien Teils des zweiten Ritzels ein, welches aufgrund dieser Randausnehmung 52 zu einem Teilritzel 11 geworden ist. Aufgrund des paßgenauen Eingriffs der Verbreiterung 54 in die Randausnehmung 52 bekommt man eine totgangfreie Mitnahme des Anschlagteils 19 dieses Ausführungsbeispiels durch das zweite Ritzel bzw. Teilritzel 11 in beiden Drehrichtungen. Die Verbreiterung 54 kann sich in axialer Richtung etwa über die Breite des zweiten Teilritzels 11 erstrecken.

Figur 7 entnimmt man, daß der außen unrunde Ring 49 des Anschlagteils 19 auf der dem Deckel 32 zugekehrten ersten Lasche 15 aufliegt. Etwa dem Nocken 36 gegenüberliegend stützt sich der Ring außerdem noch auf einer bogenförmigen Stützfläche 48 des Deckels 32 ab (Figur 3). Die bogenförmige Stützfläche 48 befindet sich im Zwischenraum zwischen den beiden Erhebungen 39 und 40 und füllt diesen Zwischenraum in bevorzugter Weise in Umfangsrichtung vollständig aus. Bei Blechherstellung handelt es sich insoweit um einen vierten Durchzug 59, der auch ins Gehäuseinnere gerichtet ist (Figur 4).

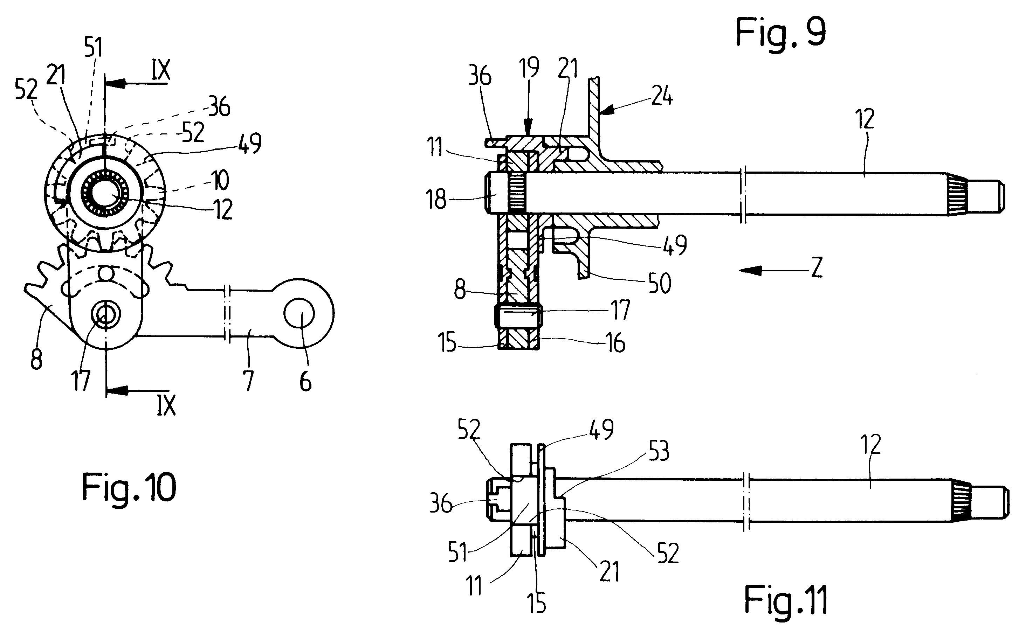

Aus Figur 11 ergibt sich, daß beim zweiten Ausführungsbeispiel eine Nockenverbreiterung 51 und damit auch der hierzu symmetrisch angeordnete Nacken 36 selbst in Umfangsrichtung des Ringes 49 dieses Anschlagteils 19 gegenüber dem Anschlagelement 21 versetzt sind. Es ist insbesondere so, daß das eine Umfangsende 53 des Anschlagelements 21 etwa dem mittleren Bereich der Nockenverbreiterung 51 zugeordnet ist. Außerdem ist, wie Figur 10 der Zeichnung zeigt, die Außenflache des Anschlagelements 21 gegenüber derjenigen der Nockenverbreiterung 51 radial zuruckversetzt, vorzugsweise um etwa 1 - 2 mm. Aus der Figur 9 ergibt sich, daß die Abtriebswelle 12 über die deckelseitige erste Lasche 15 vorsteht. Dieses vorstehende innere Ende 18 der Abtriebswelle 12 stützt sich auf einer Fläche 58 des Deckels 41 ab (Figuren 3, 4 und 5). Es kann sich dabei um einen dritten Durchzug des Blechdeckels handeln. Konzentrisch um diesen Durchzug oder diese Abstützfläche 58 verlaufen gemäß Figur 3 die bogenförmigen Rampen 30 und 31 sowie die bogenförmige Stützfläche 48.

Während beim Ausführungsbeispiel nach Figur 9 der Ring 49 an der dem Gehäuse 24 zugeordneten zweiten Lasche 16 anliegt, ist der Ring 49 des Anschlagteils 19 der Variante nach den Figuren 7 und 8 der deckelseitigen ersten Lasche 15 zugeordnet. Dabei ist insbesondere vorgesehen, daß der in axialer Richtung weisende Nacken 36 gleich weit vorsteht wie das Ende 18 der Abtriebswelle 12.

Beim Ausführungsbeispiel nach Figur 7 erfolgt die axiale Abstützung des Anschlagteils 19 am Deckel 32 über ein nicht gezeigtes Zwischenglied, wobei es sich bevorzugterweise um einen Bund der Waschwasserzuführung handeln kann. In diesem Falle ist dann die Abtriebswelle 12 axial durchbohrt. Der Vorteil dieser Ausführungsform liegt darin, daß beim Wischen die gesamte Wischerachse im Rahmen des axialen Spiels verschoben werden kann, so daß das Spiel jeweils ausgeschaltet wird.

Demgegenüber erfolgt die axiale Abstützung am Deckel beim Ausführungsbeispiel nach den Figuren 9 bis 11 in der vorstehend beschriebenen Weise über die erste Lasche 15 und die bogenförmige Stützfläche 48 an der Innenseite des Deckels 32.

Beide Varianten zeichnen sich vor allen Dingen dadurch aus, daß bei jedem Wischzyklus der Wischarm über seine Parkstellung nicht hinausgeht und auch seine Umkehrstellung korrekt einhält. Ein Nachlaufen an den beiden Umkehrstellungen ist nicht vorhanden.

## Patentansprüche

1. Antriebsvorrichtung, insbesondere für eine Scheibenwischeranlage an einem Kraftfahrzeug, mit einer pendelnd antreibbaren, axial fixierten Abtriebswelle (12) und einem drehfest daran gehaltenen Anschlagteil (19) und mit einem Vorrichtungsgehäuse (24), das mittels eines Deckels (32) oder dergleichen wenigstens teilweise abdeckbar ist, wobei das Anschlagteil (19) einen gegenüber der geometrischen Achse (38) der Antriebswelle (12) radial versetzten Nocken (36) trägt, dadurch gekennzeichnet, daß der Nocken (36) axial gegen den Deckel (32) oder dergleichen vorsteht und daß der Nocken (36) in einer Mittelstellung der Abtriebswelle (12) an der Innenseite (33) des Deckels (32) oder dergleichen anliegt, und daß sich ausgehend von dieser Deckelabstützstelle (37) nach beiden Seiten hin je eine flach ansteigende, bogenförmige Rampe (30, 31) anschließt.

2. Vorrichtung nach Anspruch 1, dadurch gekennzeichnet, daß ein Anschlagelement (21) des Anschlagteils (19) an zwei gehäusefesten Anschlägen (22, 23) des Vorrichtungsgehäuses (24) wechselweise anlegbar ist.

3. Vorrichtung nach Anspruch 2, dadurch gekennzeichnet, daß am höchsten Ende einer Rampe (30, 31) eine steil ansteigende Auftrefffläche (34, 35) für den Nocken (36) gelegen ist, wobei bei an der Auftreffläche (34, 35) anliegendem Nocken (36) das Anschlagelement (21) von seinem zugeordneten Anschlag (22, 23) allenfalls einen Minimalabstand aufweist.

4. Vorrichtung nach Anspruch 1, 2 oder 3, dadurch gekennzeichnet, daß die beiden Rampen (30, 31) und/oder die beiden Auftreffflächen (34, 35) an den Deckel (32) oder dergleichen angeformt sind, wobei jede Auftrefffläche durch die der Rampe zugeordnete Flanke einer nach innen gerichteten Erhebung (39, 40) der Innenfläche des Deckels (32) oder dergleichen gebildet ist.

5. Vorrichtung nach Anspruch 4, dadurch gekennzeichnet, daß der Deckel (32) oder dergleichen aus Blech gefertigt ist, und die beiden Rampen (30, 31) durch je einen ersten Durchzug (42, 43) des Deckelbodens (41), und die beiden Erhebungen (39, 40) durch je einen sich daran anschließenden zweiten Durchzug (44, 45) größerer liefe gebildet sind.

6. Vorrichtung nach wenigstens einem der vorhergehenden Ansprüche, dadurch gekennzeichnet, daß jede Rampe (30, 31) mit einem Radius (46) in die Auftrefffläche (34, 35) übergeht und der Nocken (36) an seinem in Bewegungsrichtung (z. B. 38) vorderen und hinteren Ende jeweils mit etwa demselben Radius versehen ist.

7. Vorrichtung nach wenigstens einem der vorhergehenden Ansprüche, dadurch gekennzeichnet, daß die Rampenhöhe bei einer bogenförmigen Längserstreckung über ca. 80° etwa 0,5 mm beträgt.

8. Vorrichtung nach wenigstens einem der Ansprüche 4 bis 7, dadurch gekennzeichnet, daß die Erhebung mit der Auftrefffläche (34, 35) etwa 2 - 3 mm hoch ist.

9. Vorrichtung nach mindestens einem der Ansprüche 3 bis 8 mit einem drehfest auf der Abtriebswelle (12) gehaltenen, wenigstens auf einem Teilumfang Zähne (10) tragenden zweiten Ritzel oder Teilritzel (11), dessen Zähne (10) mit den Zähnen (9) eines ersten, von dem Motor (1) antreibbaren Ritzels oder Teilritzels (8) kämmen, wobei sich die beiden Ritzel oder Teilritzel zwischen zwei Laschen (15, 16) befinden, an deren einem Ende die Abtriebswelle drehbar gelagert ist und deren anderes Ende über eine Achse (17) für das erste Ritzel oder Teilritzel (8) verbunden sind, dadurch gekennzeichnet, daß die dem Deckel (32) zugeordnete erste Lasche (15) auf einer bogenförmigen Stützfläche (48) des Deckels (32) abgestützt ist, die sich im Zwischenraum zwischen den beiden Erhebungen (39, 40) mit den Auftreffflächen (34, 35) befindet und insbesondere diesen Zwischenraum in Umfangsrichtung etwa ganz ausfüllt.

10. Vorrichtung nach wenigstens einem der vorhergehenden Ansprüche, dadurch gekennzeichnet, daß das Anschlagteil (19) einen auf die Abtriebswelle (12) aufgeschobenen Ring (49) aufweist, von dessen gegen den Gehäuseboden (50) weisender Fläche das als bogenförmige Leiste ausgebildete Anschlagelement (21), und von dessen gegenüberliegender Fläche der Nocken (36) jeweils in axialer Richtung vorsteht.

11. Vorrichtung nach Anspruch 10, dadurch gekennzeichnet, daß der Nocken (36) an seinem Fuß im Bereich des zweiten Ritzels oder Teilritzels (11) in Umfangsrichtung verbreitert ist und diese Verbreiterung (51) in eine Randausnehmung (52) eines zahnfreien Teils des zweiten Teilritzels (11) paßgenau eingreift.

12. Vorrichtung nach Anspruch 10 oder 11, dadurch gekennzeichnet, daß der Ring (49) des Anschlagteils (19) auf der dem Gehäuseboden (50) zugekehrten zweiten Lasche (16) aufliegt.

13. Vorrichtung nach Anspruch 11 oder 12, dadurch gekennzeichnet, daß die Nocken-Verbreiterung (51) und das Anschlagelement (21) in Umfangsrichtung des Ringes (49) gegeneinander versetzt sind, wobei insbesondere das eine Umfangsende (53) des Anschlagelements (21) dem mittleren Bereich der Nocken-Verbreiterung (51) zugeordnet ist.

14. Vorrichtung nach wenigstens einem der Ansprüche 11 bis 13, dadurch gekennzeichnet, daß die Außenfläche des Anschlagelements (21) gegenüber derjenigen der Nocken-Verbreiterung (51) radial zurückversetzt ist, vorzugsweise um etwa 1 - 2 mm.

15. Vorrichtung nach wenigstens einem der Ansprüche 2 bis 8, mit einem drehfest auf der Abtriebswelle (12) gehaltenen, wenigstens auf einem Teilumfang Zähne (10) tragenden zweiten Ritzel oder Teilritzel (11), dessen Zähne (10) mit den Zähnen (9) eines ersten, von einem Motor (1) antreibbaren Ritzels oder Teilritzels (8) kämmen, wobei sich die beiden Ritzel oder Teilritzel zwischen zwei Laschen (15, 16) befinden, an deren einem Ende die Abtriebswelle (12) drehbar gelagert ist, und deren anderes Ende über eine Achse (17) für das erste Ritzel oder Teilritzel (8) verbunden sind, dadurch gekennzeichnet, daß das Anschlagteil (19) eine auf das über die dem Deckel (32) zugewandte erste Lasche (15) überstehende freie innere Ende (18) der Abtriebswelle (12) aufgeschobene gelochte Platte aufweist, die drehfest mit dem zweiten Teilritzel (11) gekuppelt ist, wobei von der gegen den Deckel (32) weisenden Fläche der ringförmigen, gelochten Platte (49) der Nocken (36), und von der gegenüberliegenden Fläche das Anschlagelement (21) jeweils in axialer Richtung vorsteht.

16. Vorrichtung nach Anspruch 15, dadurch gekennzeichnet, daß das Anschlagteil (19) an seiner an der zugeordneten deckelseitigen ersten Lasche (15) anliegenden Fläche eine das Laschenende außen übergreifende, axial vorstehende bogenförmige Wand (54) trägt, die zur drehfesten Verbindung mit dem zweiten Teilritzel (11) in eine Randausnehmung (52) eines zahnfreien Teils des als Teilritzel ausgebildeten zweiten Ritzels paßgenau eingreift.

17. Vorrichtung nach Anspruch 16, dadurch gekennzeichnet, daß sich die axial vorstehende bogenförmige Wand (54) etwa bis zu der dem Gehäuseboden (50) zugeordneten zweiten Lasche (16) erstreckt und sie durch eine Verbreiterung (54) des insbesondere mittig angeordneten Nockens (36) gebildet ist.

18. Vorrichtung nach wenigstens einem der Ansprüche 15 bis 17, dadurch gekennzeichnet, daß die ringförmige, gelochte Platte (49) des Anschlagteils (19) die Gestalt eines Hubnockens aufweist und sich der mit den Rampen zusammenwirkende Nocken (36) an der Hubnockenspitze der Platte (49) befindet.

19. Vorrichtung nach wenigstens einem der vorhergehenden Ansprüche, dadurch gekennzeichnet, daß das Anschlagteil (19) mit dem Nocken (36) und allen anderen damit verbundenen Elementen einstückig aus Kunststoff gelertigt ist.

20. Vorrichtung nach wenigstens einem der Ansprüche 1 bis 19, gekennzeichnet durch eine zentrisch zu den bogenförmigen Rampen (30, 31) angeordnete Abstützfläche (58) für das über die deckelseitige erste Lasche (15) bzw. die gelochte Platte (49) des Anschlagteils (19) vorstehende innere Ende (18) der Abtriebswelle (12).

21. Vorrichtung nach Anspruch 20, dadurch gekennzeichnet, daß die Abstützfläche (58) für die Abtriebswelle (12) etwa kreisförmig und insbesondere durch einen dritten Durchzug gebildet ist.

## Claims

1. A driving device, in particular for a windscreen wiper installation on an automotive vehicle, with an oscillatingly drivable, axially fixed driven shaft (12) and an abutment element (19) unrotatingly carried by the latter and with a device casing (24) being coverable at least in part by means of a cover (32) or similar, said abutment element (19) bearing a cam (36) which is radially offset in respect of the geometric axis of said driving shaft (12), wherein the said cam (36) projects axially against the said cover (32) or similar and wherein in a middle position of the said driven shaft (12) abutted against the inside (33) of the said cover (32) or similar, and wherein one each gently rising, arched ramp (30, 31) succeeds toward either side starting from this cover supporting point (37).

2. A device as claimed in claim 1, wherein an abutment part (21) of the said abutment element (19) is abuttable alternately against two stops (22, 23) of the said device casing (24) which are rigid with the latter.

3. A device as claimed in claim 2, wherein at the highest end of one said ramp (30, 31) a steeply rising impact surface (34, 35) for the said cam (36) is positioned, the said abutment part (21) having a minimum distance, if ever, from its associated said stop (22, 23) when the said cam (36) is abutted against the said impact surface (34, 35).

4. A device as claimed in claim 1, 2 or 3, wherein the said two ramps (30, 31) and/or the said two impact surfaces (34, 35) are moulded to the said cover (32) or similar, each said impact surface being formed by the flank associated with the said ramp and making part of an inwardly directed projection (39, 40) of the inside surface of the said cover (32) or similar.

5. A device as claimed in claim 4, wherein the said cover (32) or similar is made of sheet or plate metal and the said two ramps (30, 31) are formed by one each first punching (42, 43) of the cover bottom (41) and the said two projections (39, 40) formed by one each second punching (44, 45) of greater depth succeeding the former.

6. A device as claimed in at least one of the preceding claims, wherein with a radius (46) each said ramp (30, 31) passes over into the said impact surface (34, 35) and the said cam (36) is provided with roughly the same radius at each of its front and rear ends as viewed in the sense of motion (e.g. 38).

7. A device as claimed in at least one of the preceding claims, wherein the ramp height amounts to approximately 0.5 mm at an arched longitudinal extension above approximately 80 degrees.

8. A device as claimed in at least one of claims 4 to 7, wherein the said projection with the said impact surface (34, 35) is about 2 to 3 mm high.

9. A device as claimed in at least one of claims 3 to 8, with a second pinion or partial pinion (11) unrotatingly held on the said driven shaft (12) and bearing teeth (10) at least on a partial circumference whose said teeth (10) mesh with the teeth (9) of a first pinion or partial pinion (8) drivable by the motor (1), the said two pinions or partial pinions being disposed between two fishplates (15, 16) upon whose one end the said driven shaft is pivoted and whose other end are connected through an axle (17) for the said first pinion or partial pinion (8), wherein the first said fishplate (15) associated with the said cover (32) is supported on an arched supporting surface (48) of the said cover (32), which former is disposed in the space between the said two projections (39, 40) with the said impact surfaces (34, 35) and, in particular, fills this space approximately totally in circumferential direction.

10. A device as claimed in at least one of the preceding claims, wherein the said abutment element (19) is furnished with a ring (49) which is plugged onto the said driven shaft (12) and from whose surface facing the casing bottom (50) the said abutment part (21) configured in the shape of an arched shoulder and from whose opposite surface the said cam (36) project, each one of them projecting in axial direction.

11. A device as claimed in claim 10, wherein the said cam (36) is widened in circumferential direction at its base in the range of the said second pinion or partial pinion (11) and wherein the widening (51) engages a marginal recess (52) of a tooth-free portion of the said second partial pinion (11) in an exactly fitting manner.

12. A device as claimed in claims 10 or 11, wherein the said ring (49) of the said abutment element (19) rests on the second said fishplate (16) facing the casing bottom (50).

13. A device as claimed in claim 11 or 12, wherein the said cam widening (51) and the said abutment part (21) are offset in respect of each other as seen in the circumferential direction of the said ring (49), the one circumferential end (53) of the said abutment part (21) being, in particular, associated with the central range of the said cam widening (51).

14. A device as claimed in at least one of claims 11 to 13, wherein the outside surface of the said abutment part (21) is radially recessed relative to that of the said cam widening (51), preferably by about 1 to 2 mm.

15. A device as claimed in at least one of claims 2 to 8, with a second pinion or partial pinion (11) unrotatingly held on the said driven shaft (12) and bearing teeth (10) at least on a partial circumference whose said teeth (10) mesh with the teeth (9) of a first pinion or partial pinion (8) drivable by a motor (1), the said two pinions or partial pinions being disposed between two fishplates (15, 16) upon whose end the driven shaft (12) is pivoted and whose other end are connected through an axle (17) for the said first pinion or partial pinion (8), wherein the said abutment element (19) is furnished with a perforated plate which is plugged onto the free internal end (18) of the said driven shaft (12) projecting beyond the said first fishplate (15) facing the said cover (32) and which is unrotatingly coupled to the said second partial pinion (11), the said cam (36) projecting from the surface of the said annular, perforated plate (49) facing the said cover (32) and the said abutment part (21) projecting from the opposite surface, both of them in axial direction.

16. A device as claimed in claim 15, wherein the said abutment element (19) carries, at its surface being abutted against the associated cover-side said first fishplate (15), an axially projecting arched wall (54) externally straddling the fishplate end, which said wall, for the purpose of establishing an unrotating coupling with the said second partial pinion (11), engages in an exact fit a marginal recess (52) of a tooth-free portion of the said second pinion configured in the shape of a partial pinion.

17. A device as claimed in claim 16, wherein the said axially projecting arched wall (54) extends approximately up to the said second fishplate (16) associated with the casing bottom (50) and wherein it is formed by a widening (54) of the said cam (36) being, in particular, arranged centrically.

18. A device as claimed in at least one of claims 15 to 17, wherein the said annular, perforated plate (49) of the said abutment element (19) has the shape of an eccentric disc and wherein the said cam (36) interacting with the said ramps is positioned at the eccentric-disc tip of the said plate (49).

19. A device as claimed in at least one of the preceding claims, wherein the said abutment element (19) with the said cam (36) and all other elements associated with it is fabricated in one piece from plastic.

20. A device as claimed in at least one of claims 1 to 19, characterized by a supporting surface (58) positioned centrically in respect of the said arched ramps (30, 31) and serving for the said internal end (18) of the said driven shaft (12) projecting beyond the said cover-side first fishplate (15), respectively beyond the said perforated plate (49) of the said abutment element (19).

21. A device as claimed in claim 20, wherein the said supporting surface (58) for the said driven shaft (12) is roughly circular and is formed, in particular, by a third punching.

## Revendications

1. Dispositif d'entraînement, notamment pour un système d'essuie-glace d'un véhicule automobile, comprenant un arbre de sortie (12) axialement fixe pouvant être entraîné en un mouvement oscillant, et une butée (19) maintenue sur cet arbre, et comprenant un carter (24) du dispositif, fermé au moins partiellement par un couvercle (32) ou similaire, la butée (19) portant une came (36) radialement décalée par rapport à l'axe géométrique (38) de l'arbre de sortie (12),
caractérisé en ce que la came (36) fait saillie axialement en direction du couvercle (32) ou similaire, et en ce qu'elle s'appuie, dans une position médiane de l'arbre de sortie (12), sur la face intérieure (33) du couvercle (32) ou similaire, et en ce que, partant de cet endroit de support (37) du couvercle, respectivement une rampe (30, 31) en forme d'arc, présentant une pente ascendante faible, s'étend de chaque côté de celui-ci.

2. Dispositif selon la revendication 1, caractérisé en ce qu'un élément de butée (21) de la butée peut entrer en contact alternativement avec deux butées fixes (22, 23) solidaires du carter (24) du dispositif.

3. Dispositif selon la revendication 2, caractérisé en ce qu'une face de butée à pente raide (34, 35) pour la came (36) se situe au sommet d'une rampe (30, 31), l'élément de butée (21) s'arrêtant au mieux à une distance minimale par rapport à la butée (22, 23) qui lui est associée, lorsque la came (36) est placé en appui sur la face de butée (34, 35).

4. Dispositif selon l'une des revendications 1, 2 ou 3, caractérisé en ce que les deux rampes (30, 31) et/ou les deux faces de butée (34, 35) sont formées dans le couvercle (32) ou similaire, chaque face de butée étant respectivement constituée par le flanc, associé à la rampe, d'un bossage (39, 40) dirigé vers l'intérieur, ménagé dans la face intérieure du couvercle (32) ou similaire.

5. Dispositif selon la revendication 4, caractérisé en ce que le couvercle (32) ou similaire est réalisé en tôle, et les deux rampes (30, 31) sont respectivement formées par un premier relief d'emboutissage (42, 43) du fond (41) du couvercle, et les deux bossages (39, 40) sont respectivement constitués par un deuxième relief d'emboutissage (44, 45) rejoignant le premier, présentant une plus grande profondeur.

6. Dispositif selon l'une au moins des revendications précédentes, caractérisé en ce que chaque rampe (30, 31) est raccordée à la face de butée (34, 35) sous un certain rayon (46), et en ce que les extrémités avant et arrière de la came (36), vues dans le sens du mouvement (par exemple 38), présentent à peu près le même rayon.

7. Dispositif selon l'une au moins des revendications précédentes, caractérisé en ce que la hauteur des rampes est de l'ordre de 0,5 mm pour une extension longitudinale selon un arc couvrant environ 80°.

8. Dispositif selon l'une au moins des revendications 4 à 7, caractérisé en ce que la hauteur de la face de butée (34, 35) est de l'ordre de 2 à 3 mm.

9. Dispositif selon l'une au moins des revendications 3 à 8, comprenant un pignon ou segment denté (11) fixé de façon solidaire en rotation sur l'arbre de sortie (12), présentant des dents sur au moins une partie de sa circonférence, pignon dont les dents (10) s'engrènent dans les dents (9) d'un premier pignon ou segment denté (8) entraîné par le moteur (1), les deux pignons ou segments dentés se situant entre deux jumelles (15, 16), l'arbre de sortie étant logé de façon à pouvoir tourner dans l'une des extrémités de celles-ci, leur autre extrémité étant reliée, par l'intermédiaire d'un axe (17), au premier pignon ou segment denté (8),
caractérisé en ce que la première jumelle (15) associée au couvercle (32), est supportée par une surface d'appui (48) en forme d'arc du couvercle (32), cette surface se situant dans l'intervalle compris entre les deux bossages (39, 40) comportant les faces de butée (34, 35), et remplissant notamment la quasi totalité de cet intervalle dans le sens de la circonférence.

10. Dispositif selon l'une au moins des revendications précédentes, caractérisé en ce que la butée (19) comporte un anneau (49) emmanché sur l'arbre de sortie (12), l'élément de butée (21) réalisé sous forme d'une baguette incurvée faisant saillie dans le sens axial à partir de la face de cet anneau, qui est dirigée face au fond (50) du carter, et la came (36) faisant saillie axialement à partir de la face opposée de l'anneau.

11. Dispositif selon la revendication 10, caractérisé en ce que le pied de la came (36) s'élargit dans le sens de la circonférence, au niveau du deuxième pignon ou segment denté (11), et en ce que cet élargissement (51) s'engage de façon ajustée dans un évidement marginal (52) ménagé dans la partie lisse du deuxième segment denté (11).

12. Dispositif selon l'une des revendications 10 à 11, caractérisé en ce que l'anneau (49) de la butée (19) s'appuie sur la deuxième jumelle (16) faisant face au fond (50) du carter.

13. Dispositif selon l'une des revendications 11 ou 12, caractérisé en ce que l'élargissement de la came (51) et l'élément de butée (21) sont décalés dans le sens de la circonférence de l'anneau (49), l'un par rapport à l'autre, l'une des extrémités circonférentielles (53) de l'élément de butée (21) étant notamment associée à la zone médiane de l'élargissement (51) de la came.

14. Dispositif selon l'une au moins des revendications 11 à 13, caractérisé en ce que la face extérieure de l'élément de butée (21) est placée radialement en retrait par rapport à celle de l'élargissement (51) de la came, de préférence de l'ordre de 1 à 2 mm.

15. Dispositif selon l'une au moins des revendications 2 à 8, comprenant un deuxième pignon ou segment denté (11) fixé de façon solidaire en rotation sur l'arbre de sortie (12), présentant des dents (10) sur une partie au moins de sa circonférence, pignon dont les dents (10) s'engrènent dans les dents (9) d'un premier pignon ou segment denté (8) entraîné par un moteur (1), les deux pignons ou segments dentés se situant entre deux jumelles (15, 16), l'arbre de sortie étant logé de façon à pouvoir tourner dans l'une des extrémités de celles-ci, leur autre extrémité étant reliée, par l'intermédiaire d'un axe (17), au premier pignon ou segment denté (8),
caractérisé en ce que la butée (19) comporte une plaque perforée emmanchée sur l'extrémité libre intérieure (18) de l'arbre de sortie (12), qui fait saillie par rapport à une première jumelle (15) faisant face au couvercle (32), cette plaque perforée étant accouplée de façon solidaire en rotation au deuxième segment denté (11), la came (36) saillant dans le sens axial à partir de la face de la plaque perforée annulaire (49), qui est dirigée vers le couvercle (32), et l'élément de butée (21) saillant axialement à partir de la face opposée de la plaque.

16. Dispositif selon la revendication 15, caractérisé en ce que l'élément de butée (19) porte, sur la face associée à la première jumelle (15) située du côté du couvercle, une paroi courbe (54) saillant axialement, s'emboîtant extérieurement sur l'extrémité de la jumelle, qui s'engrène de façon ajustée dans un évidement marginal (52) d'une partie lisse du deuxième pignon réalisé sous forme d'un segment denté, de manière à assurer une liaison solidaire en rotation.

17. Dispositif selon la revendication 16, caractérisé en ce que la paroi courbe saillant axialement, (54), s'étend à peu près jusqu'à la deuxième jumelle (16) associée au fond (50) du carter, et en ce qu'elle est constituée par un élargissement (54) de la came (36) occupant notamment une position médiane.

18. Dispositif selon l'une des revendications 15 à 17, caractérisé en ce que la plaque perforée annulaire (49) de la butée (19) a la forme d'une came de levée, et en ce que la came (36) coopérant avec les rampes se situe au niveau du sommet de came de la plaque (49).

19. Dispositif selon l'une au moins des revendications précédentes, caractérisé en ce que la butée (19) portant la came (36) ainsi que tous les autres éléments reliés à celles-ci sont réalisés d'un seul tenant en matière plastique.

20. Dispositif selon l'une au moins des revendications 1 à 19, caractérisé par une surface d'appui (58) centrée par rapport aux rampes (30, 31) en forme d'arcs, qui est prévue pour l'extrémité intérieure (18) de l'arbre de sortie (12), qui fait saillie au-delà de la première jumelle (15) située du côté du couvercle et de la plaque perforée (49) de la butée (19).

21. Dispositif selon la revendication 20, caractérisé en ce que la surface d'appui (58) de l'arbre de sortie (12) est à peu près circulaire et est notamment constituée par un troisième relief d'emboutissage.
